# EUROPÄISCHE PATENTSCHRIFT

(11) **EP 0 553 681 B1**
(45) Veröffentlichungstag und Bekanntmachung des Hinweises auf die Patenterteilung: **21.08.1996**
(21) Anmeldenummer: 93100696.9
(22) Anmeldetag: 19.01.1993
(51) Int. Cl.: A01F 15/07, A01F 15/08

(54) **Verfahren und Vorrichtung zum Bewickeln eines Ballens**
Method and apparatus for wrapping bales of crop
Procédé et dispositif pour enrubanner des balles de récolte

(30) Priorität: 24.01.1992 DE 4201856
(43) Veröffentlichungstag der Anmeldung: 04.08.1993
(73) Patentinhaber: DEERE & COMPANY, Moline, Illinois 61265 (US)
(72) Erfinder: Bestmann, Herrmann, W-2359 Schmalfeld (DE)
(74) Vertreter: Feldmann, Bernhard

(56) Entgegenhaltungen:
- AU-B- 590 141
- DE-A- 4 021 307

## Beschreibung

Die Erfindung betrifft ein Verfahren und eine Vorrichtung zum Bewickeln eines insbesondere quaderförmigen Erntegutballens mit einer Folienbahn.

In der Landwirtschaft ist es üblich, Gras durch sogenanntes Silieren für die Winterfütterung von Tieren haltbar zu machen. Für die Konservierung des Futters ist es erforderlich, das Futter zu verdichten und unter Luftabschluß zu bringen. Ein besonders futterschonendes Verfahren hierzu besteht in der Verdichtung durch sogenannte Großballenpressen, die nach verschiedenen Verfahren das Futter aufsammeln und zu quaderförmigen Ballen verschiedener Abmessungen formen.

Dieses Verfahren hat gegenüber den sogenannten Rundballenpressen den Vorteil der größeren Leistungsfähigkeit, und die Ballen sind platzsparender zu lagern und in ihrer Größe leichter an den Bedarf des einzelnen Betriebs anzupassen.

Das Herstellen des Luftabschlusses wird traditionell bewirkt durch das Zusammenstellen der Ballen an einem zentralen Ort auf der Koppel, wo sie wie ein konventionelles Fahrsilo abgedeckt werden.

In neuerer Zeit sind Verfahren bekannt geworden, die die Ballen in elastischer Folie einzeln verpacken. Die Folie wird dabei von Vorratsrollen als Endlosfolie geliefert und auf den Ballen quasi aufgespult. Hierzu wird bei allen bekannten Verfahren der Ballen um mindestens eine Achse gedreht, um alle Kanten bewickeln zu können.

Die bekannten Maschinen, z. B. WO-A1-91/13540 zum Verpacken von quaderförmigen Ballen, sind Abwandlungen der in großer Vielfalt vorhandenen Maschinen zum Verpacken von Silage-Rundballen.

Nachteil der bekannten Verfahren zur Verpackung von quaderförmigen Silage-Ballen ist, daß die Ballen näherungsweise quadratische Grundfläche benötigen, um von den Vorrichtungen gedreht werden zu können. Außerdem können die Ballen nur relativ geringe Längen annehmen, da sie sonst während der Handhabung durch die Vorrichtung durchbrechen können.

Zudem haben auch die Wickelvorrichtungen für quaderförmige Ballen den von den Rundballen-Wickelmaschinen bekannten Nachteil der sehr ungleichmäßigen Verteilung der Folienlagen auf dem Ballen. Es gibt so Stellen auf dem Ballen, die eine bis über fünffache Lagenzahl gegenüber der dünstbewickelten Stelle aufweisen. Daher muß mit Rücksicht auf die schwächste Stelle für den gesamten Ballen unnötig viel Folie aufgebracht werden. Dies verteuert die Ballenkosten und belastet nach der Verfütterung des Ballens die Umwelt mit der verbrauchten Folie.

Mit Rücksicht auf die ungleichförmige Drehbewegung des eckigen Ballens kann nur eine relativ geringe Drehzahl zugelassen werden und somit nur eine geringe Schlagkraft der Wickelmaschine erreicht werden.

Die DE-A1-40 21 307 offenbart eine Vorrichtung zum automatischen Umwickeln von quaderförmigen Großballen, bei der ein Großballen auf einer angetriebenen Rollenbahn in seiner Längsrichtung bewegt wird. Am Eingang der Wickelvorrichtung wird eine auf einer Vorratsrolle aufgewickelte Folienbahn über den Weg des Großballens gespannt, so daß dieser mit seiner Stirnfläche daran zur Anlage kommt. Während die erste Folienbahn einenends an der Vorrichtung festgelegt wird, kann sie anderenends von der Vorratsrolle abgezogen werden, wobei sie jedenfalls auf einem Teil des Wegs über die Stirnfläche des Ballens gleitet. Sobald die Folienbahn über die Stirnfläche gestülpt ist, wird eine zweite Folienbahn spiralförmig um die sich in der Bewegungsrichtung des Großballens erstreckenden Seiten-, Boden- und Deckflächen gewunden, die zugleich die erste Folienbahn festlegt. Sobald diese Flächen vollkommen bewickelt sind, wird eine dritte Folienbahn vor die gegenüberliegende Stirnfläche des Großballens gespannt, in gleicher Weise über das betreffende Ende gestülpt und mit der zweiten Folienbahn festgelegt.

Diese Vorrichtung ist mit dem Nachteil behaftet, daß es dreier Folienbahnen bedarf, um den Großballen zu bewickeln, wobei die erste und die dritte Folienbahn nur der Bedeckung der Stirnflächen dienen. Diese Folienbahnen werden aber während der Gleitbewegung über die Stirnflächen beschädigt, so daß kein luftdichter Abschluß möglich ist. Um eine relativ sichere Bedeckung der Stirnflächen mit wenigstens vier Lagen zu erzielen, muß der Großballen achtmal über seine gesamte Länge befördert werden, was bewirkt, daß währenddessen die übrigen vier Flächen achtmal bewickelt werden, wodurch ein unnötig hoher Folienbedarf entsteht.

Die der Erfindung zugrunde liegende Aufgabe wird darin gesehen, ein Verfahren und eine Vorrichtung zum Bewickeln eines Ballens, insbesondere eines quaderförmigen Erntegutballens, vorzuschlagen, mit deren Hilfe ein Ballen ausreichend sicher luftdicht mit wenig Folie bewickelt werden kann.

Diese Aufgabe ist erfindungsgemäß durch die Lehre des Patentanspruchs 1 bzw. 5 gelöst worden, wobei in den weiteren Patentansprüchen Merkmale aufgeführt sind, die die Lösung in vorteilhafter Weise weiterentwickeln.

Auf diese Weise wird der quaderförmige Ballen zum Bewickeln nur noch in Längsrichtung auf einer Anordnung von zylindrischen Stützrollen hin- und herbewegt. Die Stützrollen können in so geringem Abstand nebeneinander angeordnet werden, daß ein nennenswertes Durchhängen oder gar ein Durchbrechen des Ballens ausgeschlossen werden kann. Anstelle der Rollen können auch Förderbänder oder andere translatorisch fortbewegende Fördereinrichtungen verwendet werden.

Die Bewegung des Ballens kann insbesondere auf folgende Weisen geschehen, wobei eine Bewegungsvorrichtung entweder als angetriebene Rollen oder als ein an den Ballen angreifender Druckstempel ausgebildet ist.

Der Ballen wird durch Drehen der Rollen, auf denen er aufliegt, bewegt. Die Rollen sollen möglichst alle angetrieben werden, so daß die Antriebskraft der einzelnen Rolle auf den Ballen gering bleibt und weder Futter aus dem Ballen herausgezupft wird, noch die beim Wickeln aufgebrachte Folie beschädigt wird. Es ist denkbar, nur einen Teil der Rollen anzutreiben, wenn sichergestellt wird, daß die Kräfte auf Ballen und Folie unter den zulässigen Grenzwerten bleiben.

Der Antrieb der Rollen wird wegen der geringen Baugröße, geringen Schmutzanfälligkeit und leichten Steuerbarkeit bevorzugt durch Hydraulikmotoren erfolgen; es sind jedoch auch mechanische, elektrische oder pneumatische Antriebe realisierbar.

Nach einer anderen Weise wird der Ballen je Richtung durch einen flächigen Druckstempel bewegt, der an der jeweils in Bewegungsrichtung des Ballens hinteren Stirnfläche anliegt und mindestens so groß ist, daß die Belastung von Ballen und Folie ertragen wird. Für die Funktion der Vorrichtung zum Wickeln ist es jedoch erforderlich, den Druckstempel nach dem Arbeitshub vom Ballen wegzuziehen. Der Antrieb der Druckstempel kann bevorzugt durch Hydraulik- oder Pneumatikzylinder erfolgen, es sind aber auch Konstruktionen denkbar, bei denen über Kette, Seil oder eine ähnliche Vorrichtung der in Schienen geführte Stempel durch rotierende Hydraulik-, Elektro-, Preßluft oder Verbrennungsmotoren angetrieben wird. Allerdings kann anstelle des Druckstempels auch eine Zugstange oder ein Zuggeschirr vorgesehen werden, die nicht an einer Stirnfläche angreifen müssen, sondern auch an Seiten- und/oder Boden- und Deckflächen angreifen können.

Diese Vorrichtung und dieses Verfahren haben den Vorteil, daß der Ballen um keine seiner Achsen gedreht wird.

Der Ballen wird während des Bewickelns auf einer waagerechten Anordnung von Rollen, Förderbändern oder anderen Längsfördereinrichtungen liegend durch diese angetrieben gegenüber einer Anordnung von Folienrollen hin- und herbewegt, während von den Folienrollen eine Stretchfolie auf den Ballen aufgewickelt wird.

Alternativ wird der Ballen auf einer waagerechten Anordnung von Rollen, Förderbändern oder einer anderen Anordnung, auf der leichtes Verschieben möglich ist, liegend durch wechselweise an der vorderen und hinteren Stirnfläche angreifende Druckstempel angetrieben gegenüber einer Anordnung von Folienrollen hin- und herbewegt, während von den Folienrollen eine Strechfolie auf den Ballen aufgewickelt wird.

Parallel zur Längsachse des Ballens kann zusätzlich eine Folienrolle vorgesehen werden, die während der Längsbewegung desBallens auf einer Bahn um ihn herumbewegt wird und seine Deck-, Boden- und Seitenflächen mit Folie bewickelt.

Parallel zur Hochachse des Ballens ist eine Folienrolle angeordnet, die vor jeder Längsbewegung des Ballens auf einer Bahn vor dem Ballen entlang von einer Seite zur anderen bewegt wird und die während einer Längsbewegung des Ballens eine Seitenfläche mit Folie bewickelt.

Parallel zur Querachse des Ballens ist eine Folienrolle angeordnet, die vor jeder Längsbewegung des Ballens auf einer Bahn vor dem Ballen entlang von oben nach unten oder umgekehrt bewegt wird und die während einer Längsbewegung des Ballens eine Ober- bzw. Unterseite mit Folie bewickelt.

Die Angabe "parallel" bezieht sich stets auf die Dreh- oder Längsmittenachse der Folienrolle.

Die Bewegung der beschriebenen Folienrollen sind so koordiniert, daß mit jeder Längsbewegung jede Seite mit gleich vielen Lagen Folie bewickelt wird.

Die Verbindung der Vorrichtung mit einer Großballenpresse zu einer Einheit führt dazu, daß nur ein Schlepper und ein Bediener erforderlich ist.

Zur Erhöhung der Ernteleistung können zwei gleichartige Vorrichtungen vorgesehen werden, von denen jede jeden zweiten von der Presse erzeugten Ballen zugeleitet bekommt.

Eine schonende Ablage des bewickelten Ballens findet statt, wenn die Rollen- oder sonstige Bahn zum Ablegen und/oder zur Aufnahme des Ballens abgesenkt oder gekippt werden kann, so daß ein Ende in die Nähe des Erdbodens gelangt.

In der Zeichnung ist ein nachfolgend näher beschriebenes Ausführungsbeispiel einer Vorrichtung nach der Erfindung dargestellt.
Es zeigt:

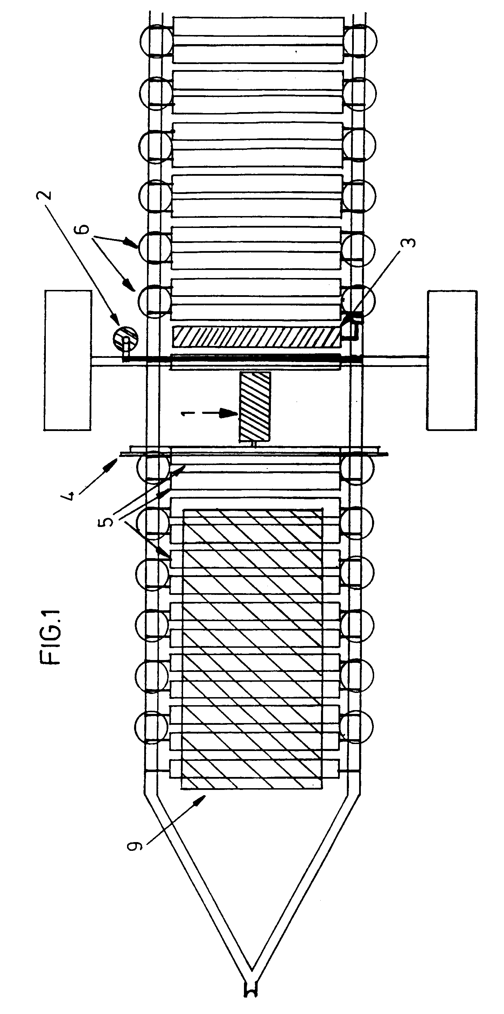

- Fig. 1: eine erfindungsgemäße Vorrichtung in Draufsicht,

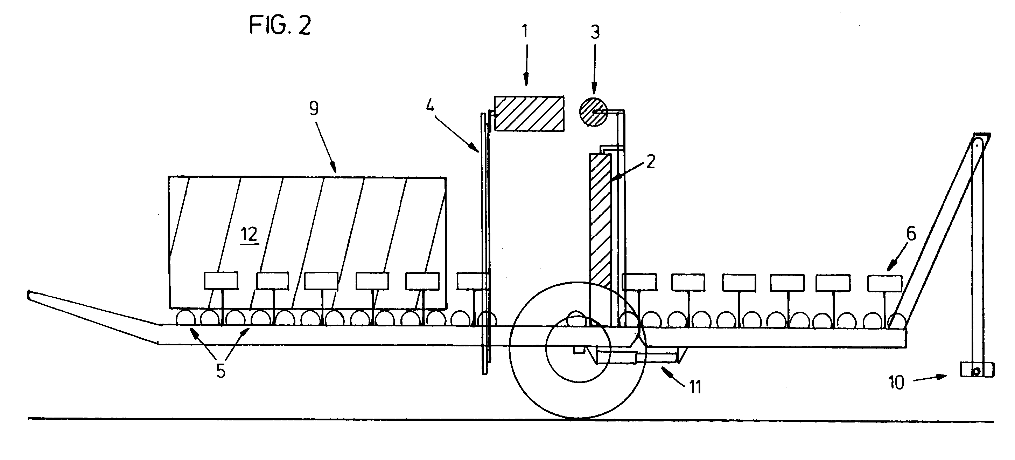

- Fig. 2: die Vorrichtung in Seitenansicht und

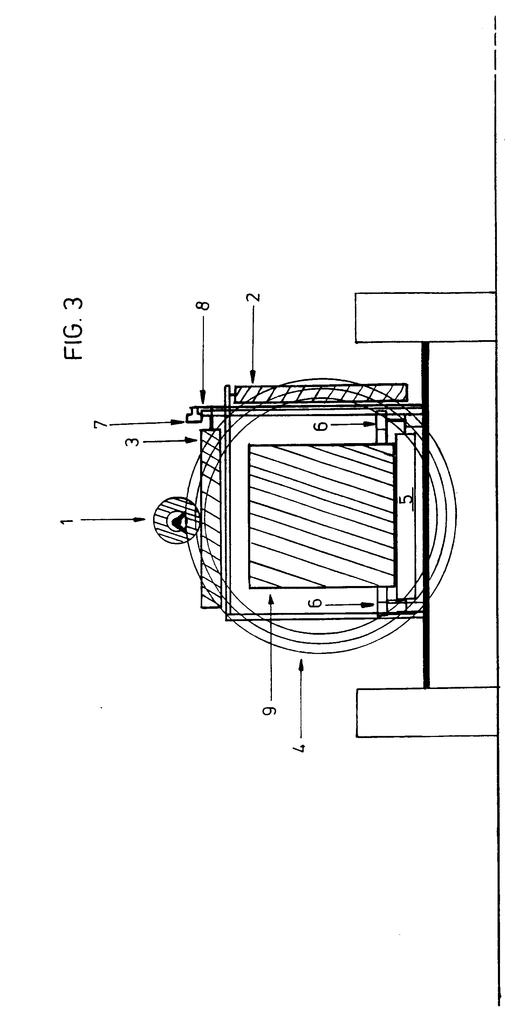

- Fig. 3: die Vorrichtung in Vorderansicht.

Das Bewickeln eines Ballens 9, insbesondere eines quaderförmigen Erntegutballens, mit einer Folienbahn 12 wird in diesem Ausführungsbeispiel durch vorzugsweise drei Abrollvorrichtungen mit jeweils einer Rolle 1, 2 und 3 für elastische Folie bewirkt. Dabei steht in diesem Ausführungsbeispiel in jeder der drei Achsen des Ballens 9 jeweils eine Rolle 1, 2 und 3 zur Verfügung. Anstatt eines Ballens 9 aus Erntegut könnten auch Ballen 9 aus industriellem Preßgut verwendet werden.

Es wird darauf hingewiesen, daß nicht in jedem Fall ein Vorrat an Folie für mehrere Ballen erforderlich ist, sondern daß auch Folienbahnen 12 mit einer vorgegebenen Länge verwendet werden können. Außerdem muß die Folienbahn 12 nicht auf einer Rolle 1,2, 3 bevorratet werden, sondern kann auch in einem nicht gezeigten Behälter gelagert werden.

Ferner sei erwähnt, daß das erfindungsgemäße Verfahren und die dazugehörige Vorrichtung zwar primär zur Bewicklung quaderförmiger Ballen gedacht ist; dennoch kann auch ein Rundballen auf gleiche Weise und mit der gleichen Vorrichtung bewickelt werden.

Die Rolle 1, deren Drehachse parallel zur Bewegungsrichtung des Ballens 9 steht, wird auf einer Kreisbahn 4 um die Seiten-Deck- und Bodenflächen des Ballens 9 rotiert und bewickelt diese, während der Ballen 9 durch den Innenraum der Kreisbahn 4 hindurchbewegt wird, mit schrägen Folienlagen. Die Kreisbahn 4 wird von zwei Schienenringen gebildet, auf der die Rolle 1 beweglich gelagert ist. Diese Folie kann zur Kostenersparnis in gewöhnlicher industrieller Qualität ausgeführt sein, muß also nicht das Futter vor Sonnenstrahlung schützen und nicht selbst UV-stabil sein. Die Breite dieser Folienbahn 12 sollte mit der Rotationsfrequenz der Rolle 1 auf der Kreisbahn 4 und der Längsbewegung des Ballens 9 so abgestimmt werden, daß eine leichte Überlappung der schräg verlaufenden Wicklungen entsteht, vorzugsweise jedoch keine doppelte Bewicklung des Ballens 9 bei einmaliger Längsbewegung entsteht.

Bei einer einfacheren Ausführung der Vorrichtung zum Bewickeln des Ballens 9 kann diese Rolle 1 entfallen, wobei jedoch unter Umständen das Arbeitsergebnis darunter leidet.

Die Rolle 2, die in der Hochachse des Ballens 9 steht, sollte in ihrer Breite so auf den Ballen 9 abgestimmt werden, daß die gereckte Folienbahn 12 noch geringfügig breiter als der Ballen 9 hoch ist. Diese Rolle 2 wird vor der ersten Längsbewegung des Ballens 9 einmal vor seiner Stirnfläche entlangbewegt; unter einer Stirnfläche soll eine quer verlaufende Fläche verstanden werden, zumal bei einem würfelförmigen Ballen jede Fläche eine Stirn- bzw. Querfläche bilden könnte. Die Folienbahn 12 wird dabei z. B. von einem mit dem Ballen 9 bewegten und als Folienbahnhalterung ausgebildeten Anleger (nicht dargestellt) gehalten. Während der ersten Längsbewegung des Ballens 9 wird eine Längsseite von dieser Rolle 2 mit Folie bewickelt. Nachdem der Ballen 9 mindestens in seiner gesamten Länge an der Rolle 2 vorbei bewegt wurde, wird die Rolle 2 an der zweiten Stirnfläche vorbeibewegt, während der Ballen 9 ruht.

Anstatt eines sich mit dem Ballen 9 bewegenden Anlegers könnte das Ende der Folienbahn 12 auch auf sonstige Weise mit dem Ballen 9 verbunden werden, z. B. durch Einstecken in das Preßgut oder dergleichen, so daß die Folienbahnhalterung aus einer reib- oder formschlüssigen Verbindung zwischen der Folienbahn 12 und dem Ballen 9 besteht.

Die Folienbahn 12 der Rolle 2 wird von der quer aufgebrachten Folienlage der zuerst beschriebenen Rolle 1 schon ausreichend gehalten, so daß der Anleger vom Ballen 9 weggefahren werden kann.

Nun wird der Ballen 9 in der Gegenrichtung verfahren und dabei seine zweite Längsseite bewickelt. Wenn er wiederum vollständig an der Rolle 2 vorbei bewegt wurde, wird diese wieder zur anderen Ballenseite verfahren, und der Zyklus beginnt von Neuem.

Je nach der Art der Befestigung der Folienbahn 12 an dem Ballen 9, sei es mittels eines mechanischen Anlegers, der sich mit dem Ballen 9 bewegt, oder sei es dadurch, daß die Folienbahn 12 an dem Ballen 9 befestigt wird, z. B. durch Einstecken in das Preßgut, und dem Ort, an dem die Folienbahn 12 an dem Ballen 9 angebracht wird, wird die erste Stirnfläche zu Beginn oder am Ende des Wickelzyklus der zweiten Rolle 2 bedeckt.

Die dritte Rolle 3 erstreckt sich parallel zu der Querachse des Ballens 9; die Breite ihrer Folienbahn 12 soll so auf die Ballenbreite abgestimmt sein, daß die gereckte Folie beidseits etwas übersteht. Der Wickelvorgang für die Ober- und Unterseite des Ballens 9 geschieht analog zum vorher beschriebenen, nur daß die Rolle 3 statt von links nach rechts hier von oben nach unten oder umgekehrt bewegt wird.

Die Bewegung der Rollen 1, 2 und 3 kann gegenüber einem Rahmen der Vorrichtung mit nicht gezeigten Hydraulikzylindern durchgeführt werden; es sind aber alle oben für den Antrieb der Rollen der Bahn 5 erwähnten Kraftquellen auch hier einsetzbar, z. B. Hydraulik- oder Elektromotor 7 mit Spindel oder Kette 8.

Zur Einsparung einer zweiten Rolle 2 oder 3 sind Verfahren denkbar, bei denen eine einzige Rolle in ihrer Achse geschwenkt wird und nacheinander die Seiten und Unter- und Oberseite des Ballens 9 bewickelt. Auch die Führung der Rolle 1 könnte - wenn auch mit einem größeren Aufwand - in die Führung der Rollen 2 und 3 integriert werden, so daß nur eine einzige Rolle auf einem Träger erforderlich wäre.

Wenn mit drei Rollen 1, 2 und 3 nach der oben beschriebenen Abstimmung der Folienbreiten gearbeitet wird, wird der Ballen 9 in jedem Zyklus auf allen sechs Seiten mit zwei Lagen Folie bewickelt. Die Gesamtzahl der Folienlagen kann nach dem Sicherheitsbedürfnis des jeweiligen Anwenders in Vielfachen von zwei durch die Auswahl der Anzahl ausgeführter halber Zyklen pro Ballen 9 gewählt werden.

Die Breite der Folienbahnen 12 und somit auch der Rollen 1, 2 und 3 ist vorzugsweise gleich gehalten, wodurch eine gute Austauschbarkeit gegeben und eine einfache Steuerung möglich ist. Die Rollen 1, 2 und 3 bilden in diesem Ausführungsbeispiel den Vorrat der Folie.

Mittels eines Betätigungsglieds 11, z. B. eines Hydraulikzylinders o. ä., kann die Rollen enthaltende Bahn 5, auf der der Ballen 9 bewegt wird, einenends abgesenkt werden, so daß eine Ablage des Ballens 9 auf den Boden ohne Beschädigung möglich ist und/oder die Aufnahme von Ballen 9 erleichtert wird.

Die Ablage und Aufnahme von Ballen 9 ist auch bei starrer Bahn 5 mittels spezieller Vorrichtungen, wie z. B. angebautem Greifer 10 oder durch ein Hilfsfahrzeug, z. B. einen Schlepper mit Frontlader oder Radlader o. ä., möglich.

Die Ballen 9 werden von den Pressen üblicherweise auf dem Boden abgelegt und könnten z. B. durch einen entsprechenden Greifer 10 aufgenommen oder durch ein Förderband oder eine ähnlich wirkende Anordnung angetriebener Rollen entweder von hinten auf die Bahn 5 der Vorrichtung geholt oder bei Vorwärtsfahrt durch eine seitlich neben den Schlepper verschwenkte Maschine aufgeladen werden.

Die erfindungsgemäße Vorrichtung könnte auch sinnvoll mit einer Großballenpresse so kombiniert werden, daß nur ein Fahrer und ein Schlepper zur Bedienung der Kombination erforderlich sind. Die Vorrichtung zum Bewickeln müßte dabei soweit automatisiert sein, daß der Fahrer seine Konzentration weitgehend auf die Schwadaufnahme durch die Presse richten kann. Die Ballen können dann über eine Schurre o. ä. direkt von der Presse zur Vorrichtung übergeben werden, ohne auf dem Boden abgelegt zu werden.

Sollte der Ausstoß von Ballen 9 aus der Presse von einer Vorrichtung nicht voll bewältigt werden können, so könnten zwei gleichartige Vorrichtungen nebeneinander jeweils jeder zweite Ballen 9 zugeleitet werden.

Zur Bewegung der Rollen bzw. zur Führung der Folienbahn ist eine vorzugsweise elektrische oder elektronische Steuerungs- oder Regelvorrichtung vorgesehen. Eine derartige Steuer- oder Regelvorrichtung ist besonders flexibel und an die jeweiligen Wickel- bzw. Ballenverhältnisse anpaßbar, wenn sie über einen programmierbaren Kleinrechner verfügt. Mit einem derartigen Kleinrechner könnte auch die Anzahl und Verteilung der jeweiligen Folienlagen geregelt werden.

## Patentansprüche

1. Verfahren zum Bewickeln eines Ballens (9), insbesondere eines quaderförmigen Erntegutballens, mit einer Folienbahn (12) unter Anwendung folgender Verfahrensschritte:
a) die Folienbahn (12) wird einenends an dem Ballen (9) festgelegt;
b) der Ballen (9) wird auf einer Bahn (5) translatorisch bewegt;
c) die Folienbahn (12) wird während und infolge der Bewegung des Ballens (9) unter Vorspannung aus einem Vorrat oder dergleichen nachgezogen, bis eine sich in der Bewegungsrichtung erstreckende Fläche des Ballens (9) mit Folie bedeckt ist;
d) die Folienbahn (12) wird anderenends über eine Stirn- oder Querfläche zu einer gegenüberliegenden Fläche des Ballens (9) geführt;
e) der Ballen (9) wird in der entgegengesetzten Richtung bewegt, bis die gegenüberliegende Fläche bedeckt ist;
f) die Folienbahn (12) wird anderenends bis zu dem Anfang der Folienbahn (12) geführt, über diese gespannt und von einem gegebenenfalls noch vorhandenen Vorrat getrennt.

2. Verfahren nach Anspruch 1, wobei eine zweite Folienbahn (12) vorgesehen ist, die analog zu der ersten Folienbahn (12) aber parallel zu den noch unbedeckten Flächen geführt wird.

3. Verfahren nach Anspruch 1 oder 2, wobei eine dritte Folienbahn (12) spiralförmig um die sich in der Bewegungsrichtung des Ballens (9) erstreckenden Flächen geschlungen wird.

4. Verfahren nach Anspruch 2, wobei die Folienbahn aus einem Vorrat entnommen wird und wenigstens eine Erstreckungsrichtung der Folienbahn (12) um im wesentlichen 90° änderbar ist.

5. Vorrichtung zum Bewickeln eines, insbesondere quaderförmigen, Ballens (9) bestehend aus wenigstens einer Folienbahn (12) aus einem Vorrat, einer Bewegungsvorrichtung zum Bewegen des Ballens (9) entlang einer Bahn (5), und einer Folienbahnhalterung, dadurch gekennzeichnet, daß die Folienbahnhalterung entweder als Anleger ausgebildet und an den Ballen (9) anlegbar und mit diesem beweglich ist oder als reib- oder formschlüssige Verbindung zwischen der Folienbahn selbst und dem Ballen (9) ausgebildet ist und daß die Folienbahn (12) quer zur Bewegungsrichtung des Ballens (9) führbar ist.

6. Vorrichtung nach Anspruch 5, dadurch gekennzeichnet, daß die Bewegungsvorrichtung von einer waagerechten Anordnung von angetriebenen Rollen, Förderbändern oder anderen Längsfördereinrichtungen gebildet wird.

7. Vorrichtung nach Anspruch 5, dadurch gekennzeichnet, daß die Bewegungsvorrichtung von einem wechselweise insbesondere an der vorderen und/oder hinteren Stirnfläche des Ballens (9) angreifenden Druckstempel gebildet wird.

8. Vorrichtung nach einem oder mehreren der Ansprüche 5 bis 7, dadurch gekennzeichnet, daß parallel zur Längsachse des Ballens (9) eine Rolle (1) angeordnet ist, die während der Längsbewegung des Ballens (9) auf einer Kreisbahn (4) um ihn herumbewegt wird und seine Seitenflächen mit Folie bewickelt.

9. Vorrichtung nach einem oder mehreren der vorherigen Ansprüche 5 bis 8, dadurch gekennzeichnet, daß der Vorrat von einer Rolle (2) oder (3) gebildet wird, die in Stellungen parallel zu der Hochachse und der Querachse des Ballens (9) bringbar ist, oder von zwei Rollen (2) und (3), von denen sich eine parallel zu der Hochachse und eine parallel zu der Querachse des Ballens (9) erstreckt.

10. Vorrichtung nach einem oder mehreren der vorherigen Ansprüche 5 bis 9, dadurch gekennzeichnet, daß die Führung oder der Vorrat der Folienbahn (12), insbesondere die Rolle(n) (2, 3), quer zu der Bewegungsrichtung des Ballens (9) bewegbar ist/sind.

11. Vorrichtung nach einem oder mehreren der vorherigen Ansprüche 5 bis 10, dadurch gekennzeichnet, daß die Stellung und Bewegung des Vorrats bzw. der Führung mittels einer Steuer- oder Regelvorrichtung eingestellt wird.

12. Vorrichtung nach einem oder mehreren der vorherigen Ansprüche 5 bis 11, dadurch gekennzeichnet, daß sie an eine Presse, insbesondere an eine landwirtschaftliche Großballenpresse, anschließbar ist.

13. Vorrichtung nach einem oder mehreren der vorherigen Ansprüche, dadurch gekennzeichnet, daß mehrere Vorrichtungen parallel zueinander dem Auslaß einer Presse nachgeschaltet sind.

14. Vorrichtung nach einem oder mehreren der vorherigen Ansprüche, dadurch gekennzeichnet, daß die Bahn (5) als Ablegevorrichtung ausgebildet oder mit einer solchen verbunden ist.

## Claims

1. Method for wrapping a bale (9), especially a square shaped bale of crop, with a continuous sheet of film (12) by using the following process stages:
a) the continuous sheet of film (12) is secured at one end to the bale (9);
b) the bale (9) is moved in a translatory manner on a track (5);
c) the continuous sheet of film (12) is drawn under tension from a supply or the like during and as a result of the movement of the bale (9) until a surface of the bale (9) extending in the movement direction is covered with film;
d) the continuous sheet of film (12) at the other end is guided over a front or transverse surface to an oppositely arranged surface of the bale (9);
e) the bale (9) is moved in the opposite direction until the oppositely arranged surface is covered;
f) the continuous sheet of film (12) at the other end is guided to the start of the continuous sheet of film (12), is stretched over this and separated from any still remaining supply.

2. Method according to claim 1, in which a second continuous sheet of film (12) is provided which is guided analogous to the first continuous sheet of film (12) but parallel to the still uncovered surfaces.

3. Method according to claim 1 or 2, wherein a third continuous sheet of film (12) is wrapped in spiral shape around the surfaces extending in the movement direction of the bale (9)

4. Method according to claim 2, wherein the continuous film sheet is taken from a supply and at least one direction of travel of the continuous sheet of film (12) can be changed by essentially 90°.

5. Device for wrapping a bale (9), especially a square shaped bale, consisting of at least one continuous sheet of film (12) from a supply, a movement device for moving a bale (9) along a track (5), and a continuous sheet of film holder, characterised in that the continuous sheet of film holder is constructed either as a lay-on and can be placed against the bale (9) and is movable with this or is constructed as a friction or form-locking connection between the continuous sheet of film itself and the bale (9) and that the continuous sheet of film (12) can me guided transverse to the movement direction of the bale (9).

6. Device according to claim 5, characterised in that the movement device is formed of a horizontal arrangement of driven rollers, conveyor belts or other longitudinal conveying devices.

7. Device according to claim 5, characterised in that the movement device is formed of a pressure piston which alternately engages especially the front and/or rear front face of the bale (9).

8. Device according to one or more of the claims 5 to 7, characterised in that parallel to the longitudinal axis of the bale (9) is arranged a roller (1) which during the longitudinal movement of the bale (9) is moved around it on a circular track (4) and wraps its lateral surfaces with film.

9. Device according to one or more of the preceding claims 5 to 8, characterised in that the supply is formed of a roller (2) or (3) which can be brought into positions parallel to the vertical axis and the transverse axis of the bale (9), or of two rollers (2) and (3) of which one extends parallel to the vertical axis and one extends parallel to the transverse axis of the bale (9).

10. Device according to one or more of the preceding claims 5 to 9, characterised in that the guidance or the supply of the continuous sheet of film (12), especially the roller(s) (2, 3), can be moved transverse to the movement direction of the bale (9).

11. Device according to one or more of the preceding claims 5 to 10, characterised in that the position and movement of the supply or the guidance can be adjusted by means of a control or regulating device.

12. Device according to one or more of the preceding claims 5 to 11, characterised in that it can be connected to a press, especially an agricultural large baling press.

13. Device according to one or more of the preceding claims, characterised in that several devices parallel to each other are connected to the outlet of a press.

14. Device according to one or more of the preceding claims, characterised in that the track (5) is constructed as a depositing device or is connected to such a device.

## Revendications

1. Procédé pour enrubanner une balle (9), notamment une balle de récolte de forme parallélépipédique, avec un ruban de film (12) moyennant la mise en oeuvre des étapes opératoires suivantes :
a) on fixe le ruban de film (12) par une extrémité à la balle (9);
b) on déplace en translation la balle (9) sur une trajectoire (5);
c) le ruban de film (12) est tiré sous précontrainte à partir d'une réserve ou analogue, pendant et sous l'effet du déplacement de la balle (9) jusqu'à ce qu'une surface de la balle (9), qui s'étend dans la direction de déplacement, soit recouverte par le film;
d) le ruban de film (12) est guidé, à son autre extrémité, au-dessus d'une surface frontale et transversale jusqu'à une surface opposée de la balle (9);
e) la balle (9) est déplacée en sens opposé jusqu'à ce que la surface opposée soit recouverte;
f) le ruban de film (12) est guidé, à son autre extrémité, jusqu'au début du ruban de film (12), est serré par dessus ce début et est séparé d'une réserve encore éventuellement présente.

2. Procédé selon la revendication 1, selon lequel il est prévu un second ruban de film (12), qui est guidé, d'une manière analogue au premier ruban de film (12), mais en étant parallèle aux surfaces non encore recouvertes.

3. Procédé selon la revendication 1 ou 2, selon lequel un troisième ruban de film (12) est enroulé selon une disposition hélicoïdale autour des surfaces qui s'étendent dans la direction de déplacement de la balle (9).

4. Procédé selon la revendication 2, selon lequel le ruban de film est tiré d'une réserve et au moins une direction d'extension du ruban de film (12) peut être modifiée sensiblement de 90°.

5. Dispositif pour enrubanner une balle (9), notamment de forme parallélépipédique, constitué par au moins un ruban de film (12) tiré d'une réserve, un dispositif de déplacement servant à déplacer la balle (9) le long d'une trajectoire (5) et un système de support de la bande de film, caractérisé en ce que le système de support de la bande de film est soit agencé sous la forme d'un bras en console et peut être appliqué contre la balle (9) et est déplaçable avec cette dernière, soit agencé sous la forme d'une liaison à friction ou d'une liaison par formes complémentaires entre le ruban de film lui-même et la balle (9), et que le ruban de film (12) peut être guidé transversalement par rapport à la direction de déplacement de la balle (9).

6. Dispositif selon la revendication 5, caractérisé en ce que le dispositif de déplacement est formé par un ensemble horizontal de rouleaux entraînés, de bandes convoyeuses ou d'autres dispositifs de convoyage longitudinal.

7. Dispositif selon la revendication 5, caractérisé en ce que le dispositif de déplacement est formé par un poussoir qui attaque alternativement notamment la surface avant et/ou la surface frontale arrière de la balle (9).

8. Dispositif selon une ou plusieurs des revendications 5 à 7, caractérisé en ce que parallèlement à l'axe longitudinal de la balle (9) est disposé un rouleau (1), qui, pendant le déplacement longitudinal de la balle (9), est déplacé autour de la balle selon une trajectoire circulaire (4) et enveloppe les surfaces latérales de la balle avec le film.

9. Dispositif selon une ou plusieurs des revendications précédentes 5 à 8, caractérisé en ce que la réserve est formée par un rouleau (2) ou (3), qui peut être amené dans des positions parallèles à l'axe vertical et à l'axe transversal de la balle (9), ou par deux rouleaux (2) et (3), dont l'un s'étend parallèlement à l'axe vertical et dont l'autre s'étend parallèlement à l'axe transversal de la balle (9).

10. Dispositif selon une ou plusieurs des revendications précédentes 5 à 9, caractérisé en ce que le guide ou la réserve du ruban de film (12), notamment du ou des rouleaux (2,3), est/sont déplaçable(s) transversalement par rapport à la direction de déplacement de la balle (9).

11. Dispositif selon une ou plusieurs des revendications précédentes 5 à 10, caractérisé en ce que la position et le déplacement de la réserve ou du guide est réglé au moyen d'un dispositif de commande ou de régulation.

12. Dispositif selon une ou plusieurs des revendications précédentes 5 à 11, caractérisé en ce qu'il peut être raccordé à une presse, notamment à une presse agricole à balles de grande taille.

13. Dispositif selon une ou plusieurs des revendications précédentes, caractérisé en ce que plusieurs dispositifs sont montés réciproquement en parallèle en aval de la sortie d'une presse.

14. Dispositif selon une ou plusieurs des revendications précédentes, caractérisé en ce que la trajectoire (5) est agencée sous la forme d'un dispositif de dépôt ou est reliée à un tel dispositif.
